# FASCICULE DE BREVET EUROPEEN

(11) **EP 3 278 475 B1**
(45) Date de publication et mention de la délivrance du brevet: **27.02.2019**
(21) Numéro de dépôt: 16714839.4
(22) Date de dépôt: 30.03.2016
(51) Int. Cl.: H04B 10/112

(54) **DISPOSITIF DE COMMUNICATION OPTIQUE EN ESPACE LIBRE**
VORRICHTUNG FÜR OPTISCHE FREIRAUMKOMMUNIKATION
FREE SPACE OPTICAL COMMUNICATIONS DEVICE

(30) Priorité: 30.03.2015 FR 1552689
(43) Date de publication de la demande: 07.02.2018
(73) Titulaire: UTC (Université de Technologie de Compiègne), 60203 Compiègne cedex (FR); Centre National de la Recherche Scientifique, 75016 Paris (FR); Université de Picardie Jules Verne, 80025 Amiens Cedex 1 (FR)
(72) Inventeur: LAMARQUE, Frédéric, 60200 Compiegne (FR); PRELLE, Christine, 60200 Compiegne (FR); AL HAJJAR, Hani, 60200 Compiegne (FR); TERRIEN, Jérémy, 60150 Longueil-Annel (FR); ZEINERT, Andreas, 75019 Paris (FR)
(74) Mandataire: Hirsch & Associés
(86) Numéro de dépôt international: PCT/EP2016/056954
(87) Numéro de publication internationale: WO 2016/156427

(56) Documents cités:
- EP-A2- 0 378 148
- WO-A1-00/25433
- WO-A1-2010/148324
- CA-A1- 2 308 000
- DE-A1-102006 055 156
- US-A- 5 910 851
- US-A- 6 025 942
- US-A1- 2004 151 504
- US-A1- 2007 031 151
- US-A1- 2009 027 658
- US-B1- 7 292 789

## Description

La présente invention concerne de manière générale les dispositifs de communication optique en espace libre multiplexés en longueurs d'ondes. Plus précisément, l'invention concerne les dispositifs de communication optique en espace libre multiplexés en longueurs d'ondes comprises entre 400 nm et 1600 nm.

La présente invention concerne également : les systèmes de communication optique multiplexés en espace libre et en particulier les systèmes de communication optique en espace libre multiplexés en longueurs d'ondes comprises entre 400 nm et 1600 nm.

L'invention concerne également les procédés de communication optique en espace libre multiplexés et en particulier les procédés de communication optique en espace libre multiplexés en longueurs d'ondes comprises entre 400 nm et 1600 nm.

Les communications sans fil sont actuellement largement mises en oeuvre dans les bandes des radiofréquences (RF) à travers plusieurs technologies telles que le WiFi, le Bluetooth, le Zigbee et l'Ultra WideBand (UWB). Ces technologies donnent accès à des débits allant jusqu'à quelques centaines de Megabit/seconde (Mbit/s) pour des systèmes considérés complexes à déployer. Ce type de communication est associé à plusieurs limitations, parmi lesquelles :
- la limitation de la bande passante des systèmes et par suite du débit transmis,
- les interférences électromagnétiques d'une part entre les différents types d'émetteurs et d'autre part entre émetteurs et les différents modules électroniques (par exemple des récepteurs).

Une solution alternative qui est susceptible de s'affranchir de ces limitations est la communication par transmission optique en espace libre. Cette solution présente plusieurs avantages et en particulier le bas coût des composants optiques utilisés (pour les transmissions fibrées et pour l'éclairage), et la sécurité des données transmises. En effet, dans le cas d'une utilisation domestique, il est impossible de détecter le signal transmis depuis l'extérieur d'une pièce et même de repérer le signal transmis dans le cas d'utilisation de longueurs d'ondes non visibles. Cette solution a enfin un avantage en termes d'immunité sanitaire (pas de radiations électromagnétiques).

Dans le domaine, on connaît déjà un dispositif de communication optique en espace libre multiplexé en longueurs d'ondes, ledit dispositif comprenant des moyens de démultiplexage configurés de sorte à dissocier distinctement un nombre de longueurs d'ondes les unes des autres.

En particulier, on connaît déjà un système de communication optique visant à utiliser un ensemble de longueurs d'ondes émises simultanément en mode parallèle et regroupées dans un seul faisceau lumineux dans le but d'atteindre des débits supérieurs au Gbit/s. A la réception, des composants fibrés sont utilisées pour séparer les longueurs d'ondes. De tels composants fibrés nécessitent une opération consistant à pratiquer une injection du faisceau optique dans une fibre optique afin de rendre possible la dissociation de chacune des longueurs d'ondes, une telle opération est rendue difficile par la précision avec laquelle un faisceau optique doit être injecté dans la fibre optique. En effet, le positionnement imprécis du composant fibré affecterait négativement le fonctionnement du dispositif de communication optique. Cette contrainte de précision affecte négativement le coût d'exploitation de ce système de communication optique.

En outre, il a été constaté qu'un tel système de communication optique était très sensible à l'environnement extérieur et en particulier aux vibrations. En effet, l'agencement de ces composants requiert qu'il n'y ait aucun mouvement dans l'émetteur ou aucun mouvement relatif entre l'émetteur et le récepteur. Par exemple, un mouvement du bâti de l'émetteur engendre une déviation dans le système émetteur, ce qui entraîne la perte de signal par le détecteur. La communication est alors rompue.

Les techniques connues de multiplexage/démultiplexage WDM en espace libre ne sont qu'une adaptation du multiplexage/démultiplexage traditionnel du domaine technique des télécommunications dans la bande C (1530-1565 nm). Ce sont des techniques de multiplexage et démultiplexage dites fibrées dans lequel le signal émis sort d'une fibre et est injecté dans une fibre optique de réception de quelques micromètres de diamètre. Il a été constaté que l'injection du signal à la réception, dans cette fibre optique, génère une atténuation importante du signal et impose que le système de communication optique soit fixe pour ne pas perdre la connexion.

Les techniques connues de communication en espace libre reposent sur des systèmes de communication utilisant des composants fibrés et trouvent une application dans le domaine des télécommunications entre points fixes horizontaux (communications entre bâtiments) ou verticaux (communications sol-satellite).

On connaît dans l'état de la technique, notamment du document US 6 025 942, un dispositif reprenant les caractéristiques du préambule de la revendication 1. En particulier, ce dispositif comprend des éléments actifs chacun arrangé pour détecter sélectivement une longueur d'onde via un filtre optique directement en contact avec l'élément actif correspondant. Ce type de structure risque de causer un endommagement de l'élément actif lors de la mise en oeuvre d'un procédé de fabrication tel que qu'un procédé de dépôt par plasma qui est un procédé d'assemblage préférentiel pour le dépôt de filtres optiques.

Dans ce contexte, le problème ici posé est de proposer un dispositif de communication optique en espace libre multiplexé en longueurs d'ondes comprises entre 400 nm et 1600 nm, qui soit de construction simple et permettant pour un montage simplifié du dispositif de communication optique, d'en faciliter sa mise en oeuvre. Plus particulièrement, le problème visé par la présente invention est de réduire les coûts liés à l'exploitation d'un tel dispositif de communication optique, tout en améliorant la dissociation des longueurs d'ondes dans un environnement dynamique, y compris dans un environnement soumis à des vibrations. Est également ici visé l'amélioration de la dissociation des longueurs d'ondes lorsque le dispositif de communication optique est mobile par rapport à un autre dispositif de communication optique.

La solution proposée par la présente invention est que les moyens de démultiplexage comprennent un ou plusieurs détecteurs présentant un nombre n2 de filtres optiques et d'éléments actifs correspondant au nombre n1 de longueurs d'ondes, chaque élément actif étant arrangé pour détecter sélectivement une longueur d'onde parmi lesdites longueurs d'ondes (λ1... λn) via un filtre optique distinct de l'élément actif. L'élément actif est compris dans un boitier. Le filtre optique est au contact de l'élément actif ou d'un moyen de protection interposé entre le filtre optique et l'élément actif, ledit moyen de protection refermant ledit boitier.

Un tel dispositif de communication permet de pallier les inconvénients précités, en particulier lors de son exploitation. Ainsi agencé, il n'est plus nécessaire de pratiquer une injection dans une fibre optique pour permettre le démultiplexage de chacune des longueurs d'ondes, le ou les détecteur(-s) réalisant cette fonction. En effet, les détecteurs présentent un nombre de filtres optiques et d'éléments actifs qui correspondent au nombre de longueurs d'ondes à dissocier. Chaque filtre optique réalise alors une fonction de sélection d'une longueur d'onde parmi les longueurs d'ondes à dissocier et chaque élément actif est propre à convertir la lumière à la longueur d'onde sélectionnée par le filtre optique en un signal électrique.

Ces détecteurs permettent par ailleurs un fonctionnement plus souple du dispositif. N'étant plus dépendant de structure mécanique ou de structure optique complexes, le dispositif est affranchi de structures particulièrement soumises aux conditions environnementales. En effet, la multiplicité des parties ou éléments combinés d'une manière à réaliser la fonction de démultiplexage sont sensibles aux variations alors que les présents moyens de démultiplexage sont robustes et sont peu impactés par des sollicitations dynamiques telles que des vibrations. La vibration, qui est un mouvement d'un système mécanique voisin d'un état de repos, pouvant se produire même si le dispositif de communication optique semble immobile par rapport à son environnement, a alors un impact limité sur l'exploitation du dispositif de communication optique. Ainsi, le dispositif de communication optique conserve le signal bien que les longueurs d'ondes soient légèrement déviées, notamment lorsqu'il communique avec un autre dispositif de communication optique envoyant lesdites longueurs d'ondes vers le dispositif selon l'invention. Ces moyens de démultiplexage permettent donc de supprimer la contrainte liée au maintien en position fixe du dispositif de communication optique selon l'invention ou du dispositif de communication émetteur avec lequel le dispositif selon l'invention communique.

L'agencement d'un filtre optique distinct de l'élément actif et au contact de celui-ci permet de simplifier la construction d'un détecteur en évitant l'interposition d'autres éléments entre le filtre optique et l'élément actif. Le contact entre le filtre optique et l'élément optique permet par exemple de minimiser la dépendance du dispositif de communication optique aux sollicitations extérieures.

Lorsque le filtre optique est déposé sur l'élément actif ou sur le moyen de protection interposé entre le filtre optique et l'élément actif, les sollicitations dynamiques auxquelles le dispositif est soumis, impactent peu la qualité de la détection.

En outre, la solution proposée permet de communiquer en recevant des informations ou des commandes transmises depuis un dispositif émetteur, indépendamment des réseaux de télécommunications. Ce dispositif peut aussi être utilisé dans les réseaux télécom surtout au niveau des réseaux d'accès pour augmenter le débit ou même fournir une connexion sans fil sans utilisation d'ondes électromagnétiques dans la zone de réception.

Le dispositif selon l'invention emploie des longueurs d'ondes comprises entre 400 et 1600 nm. Ce spectre, relativement large par rapport au spectre de longueurs d'ondes utilisé dans l'art antérieur, permet d'utiliser plus de longueurs d'ondes, ce qui augmente le débit de la communication.

Dans un mode de réalisation, chaque filtre optique est constitué par un empilement de couches minces déposées sur l'élément actif ou sur le moyen de protection.

Dans un mode de réalisation, les moyens de démultiplexage comprennent :
- un détecteur comprenant une pluralité de filtres optiques associée avec une pluralité d'éléments actifs comprise dans le boitier, et/ou,
- une pluralité de détecteurs comprenant chacun un unique filtre optique associé avec un unique élément actif compris chacun dans un boitier.

Dans un mode de réalisation, les éléments actifs sont des photodiodes.

Dans un mode de réalisation, le dispositif de communication optique comprend un premier dispositif de balayage configuré de sorte à détecter la présence d'un deuxième dispositif de communication optique comprenant une pluralité d'émetteurs de lumière adaptés pour émettre le nombre n1 de longueurs d'ondes distinctes les unes des autres et des moyens de multiplexage pour confondre lesdites longueurs d'ondes sur un même axe optique A, lesdits moyens de démultiplexage étant fixés sur le premier dispositif de balayage et étant configurés pour dissocier les longueurs d'ondes dudit deuxième dispositif de communication optique.

Dans un mode de réalisation, le dispositif de communication optique comprend des moyens de locomotion.

Dans un mode de réalisation, le moyen de protection est configuré de sorte que l'énergie d'une onde lumineuse ayant la longueur d'onde sélectionnée via le filtre optique et répartie sur une première surface du filtre optique, est concentrée sur une surface de l'élément actif relativement plus petite que ladite première surface.

Dans un mode de réalisation, le dispositif de communication optique comprend :
- une pluralité d'émetteurs de lumière adaptés pour émettre ledit nombre n1 de longueurs d'ondes,
- des moyens de multiplexage pour confondre lesdites longueurs d'ondes distinctes les unes des autres sur un même axe optique B.

Dans un mode de réalisation, le dispositif de communication optique comprend un deuxième dispositif de balayage configuré de sorte à émettre lesdites longueurs d'ondes confondues sur le même axe optique B vers un troisième dispositif de communication optique comprenant des moyens de démultiplexage pour dissocier lesdites longueurs d'ondes, les moyens de multiplexage dudit dispositif de communication optique étant fixés sur le deuxième dispositif de balayage.

Dans un mode de réalisation, le premier dispositif de balayage et le deuxième dispositif de balayage comprennent des actionneurs élémentaires multistables configurés pour être contrôlés électriquement par une unité de commande et en ce que le dispositif comprend un module de communication comprenant :
- une première fonction de recherche d'une communication avec un autre dispositif de communication optique, durant laquelle les actionneurs élémentaires multistables dudit premier dispositif de balayage et dudit deuxième dispositif de balayage sont mobiles,
- une deuxième fonction de sommeil, lorsque la communication est établie, durant laquelle les actionneurs élémentaires multistables sont immobiles.

Suivant un deuxième objet de l'invention, est également visé un système qui comprend :
- au moins un dispositif de communication optique selon l'un des modes de réalisation susmentionnés,
- un deuxième dispositif de communication optique comprenant une pluralité d'émetteurs de lumière adaptés pour émettre le nombre n1 de longueurs d'ondes distinctes les unes des autres et des moyens de multiplexage pour confondre lesdites longueurs d'ondes sur un même axe optique.

Dans un mode de réalisation, le système comprend :
- au moins un premier dispositif de communication optique selon l'un des modes de réalisation comprenant une pluralité d'émetteurs de lumière adaptés pour émettre ledit nombre n1 de longueurs d'ondes et des moyens de multiplexage pour confondre lesdites longueurs d'ondes distinctes les unes des autres sur un même axe optique B,
- un deuxième dispositif de communication optique comprenant une pluralité d'émetteurs de lumière adaptés pour émettre le nombre n1 de longueurs d'ondes distinctes les unes des autres et des moyens de multiplexage pour confondre lesdites longueurs d'ondes sur un même axe optique A,
- un troisième dispositif de communication optique comprenant des moyens de démultiplexage pour dissocier distinctement le nombre n1 de longueurs d'ondes les unes des autres,
ledit troisième dispositif étant configuré pour détecter lesdites longueurs d'ondes émises par ledit premier ou deuxième dispositif de communication optique.

Dans un mode de réalisation, l'ensemble des dispositifs de communication optique comprend des moyens de locomotion respectifs de sorte à les rendre mobiles entre eux.

Suivant un troisième objet de l'invention, est également visé un procédé de communication optique multiplexé en espace libre en longueurs d'ondes comprises entre 400 nm et 1600 nm comprenant les étapes suivantes :
- émission, par un deuxième dispositif de communication optique, d'un nombre n1 de longueurs d'ondes confondues sur un même axe optique A,
- détection, par un premier dispositif de communication optique, du nombre n1 de longueurs d'ondes au moyen d'un ou plusieurs détecteurs présentant un nombre n2 de filtres optiques et d'éléments actifs correspondant au nombre n1 de longueurs d'ondes, chaque élément actif étant arrangé pour détecter sélectivement une longueur d'onde parmi lesdites longueurs d'ondes via un filtre optique distinct de l'élément actif lequel est compris dans un boitier, le filtre optique étant au contact :
   - de l'élément actif,
   - d'un moyen de protection interposé entre le filtre optique et l'élément actif, ledit moyen de protection (114) refermant ledit boitier.

Dans un mode de réalisation, le procédé comprend les étapes suivantes :
- émission, par ledit premier dispositif, du nombre n1 de longueurs d'ondes vers un troisième dispositif de communication optique,
- détection, par ledit deuxième et/ou troisième dispositif de communication optique, du nombre n1 de longueurs d'ondes.

Dans un mode de réalisation, le premier dispositif, le deuxième dispositif et le troisième dispositif sont mobiles entre eux, le procédé comprenant en outre les étapes suivantes :
- détection par balayage, par le premier dispositif, de la présence du deuxième dispositif de communication optique,
- détection par balayage, par le troisième dispositif, de la présence du premier dispositif.

Dans un mode de réalisation, le balayage est effectué au moyen d'actionneurs multistables contrôlés par une unité de commande, le procédé comprenant lors de la détection par balayage, par le premier dispositif, de la présence d'au moins un des deuxième et troisième dispositifs de communication optique, des étapes consistant à :
- mouvoir les actionneurs multistables jusqu'à l'établissement d'une communication avec l'au moins un des deuxième et troisième dispositifs de communication optique,
- maintenir immobiles les actionneurs multistables lorsque la détection par le premier dispositif de communication du nombre n1 de longueurs d'ondes émises par l'au moins un des deuxième et troisième dispositifs de communication optique est terminée,
- mouvoir de nouveau les actionneurs multistables après une durée prédéterminée.

D'autres caractéristiques et avantages ressortiront encore de la description qui est faite ci-après à titre indicatif et nullement limitatif, en référence aux dessins annexés, dans lesquels :
- la figure 1 illustre une représentation schématique d'un exemple de réalisation du dispositif comprenant une pluralité de détecteurs,
- la figure 2a illustre une représentation schématique d'un exemple de réalisation du dispositif comprenant un seul détecteur comprenant une pluralité de filtres optiques associée avec une pluralité d'éléments actifs comprise dans le boitier, le filtre optique étant au contact d'un moyen de protection interposé entre le filtre optique et l'élément actif,
- la figure 2b illustre une représentation schématique d'un exemple de réalisation du dispositif comprenant un seul détecteur comprenant une pluralité de filtres optiques associée avec une pluralité d'éléments actifs comprise dans le boitier, le filtre optique étant au contact de l'élément actif,
- la figure 3 représente un schéma de fonctionnement d'un exemple de réalisation d'un système mettant en oeuvre le dispositif de communication optique selon l'invention,
- les figures 4 et 5 représentent des schéma-blocs du fonctionnement d'un exemple de réalisation d'un système de communication optique bidirectionnelle mettant en oeuvre le dispositif de communication optique selon l'invention,
- la figure 6 représente un schéma de fonctionnement d'un autre exemple de réalisation d'un système mettant en oeuvre le dispositif de communication optique selon l'invention,
- les figures 7 et 8 représentent des schéma-blocs du fonctionnement d'un autre exemple de réalisation d'un système de communication optique mono-directionnelle mettant en oeuvre le dispositif de communication optique selon l'invention,
- la figure 9 illustre un exemple de réalisation d'un dispositif d'émission optique comprenant une pluralité d'émetteurs de lumière adaptés pour émettre le nombre de longueurs d'ondes distinctes les unes des autres et des moyens de multiplexage pour confondre lesdites longueurs d'ondes sur un même axe optique.

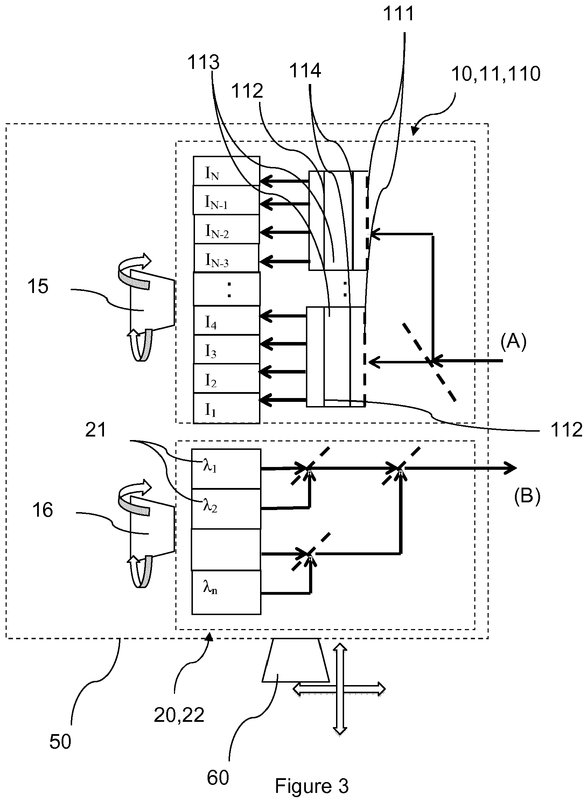

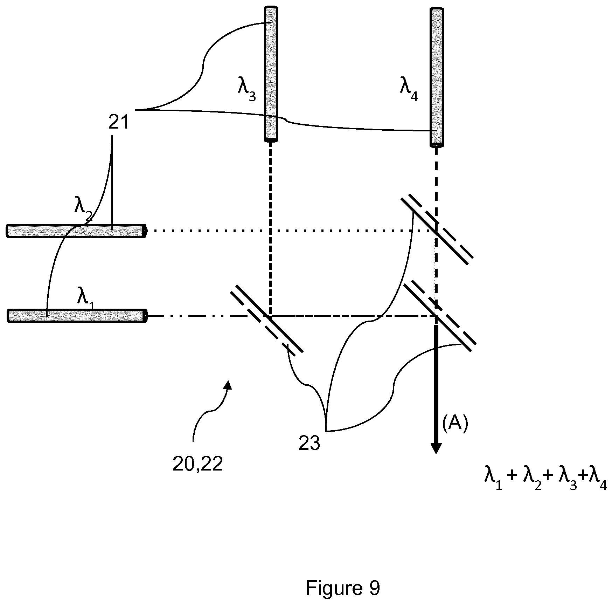

Sur les figures 3 à 8, est représenté un dispositif 10 de communication optique en espace libre multiplexé en longueurs d'ondes comprises entre 400 nm et 1600 nm. Le dispositif 10 comprend des moyens de démultiplexage 11 configurés de sorte à dissocier distinctement un nombre n1 de longueurs d'ondes les unes des autres. Classiquement, ce nombre n1 de longueurs d'ondes est émis par un deuxième dispositif 20 de communication optique, sur un même axe optique A (figure 9). Ce deuxième dispositif 20 agit comme un émetteur de longueurs d'ondes.

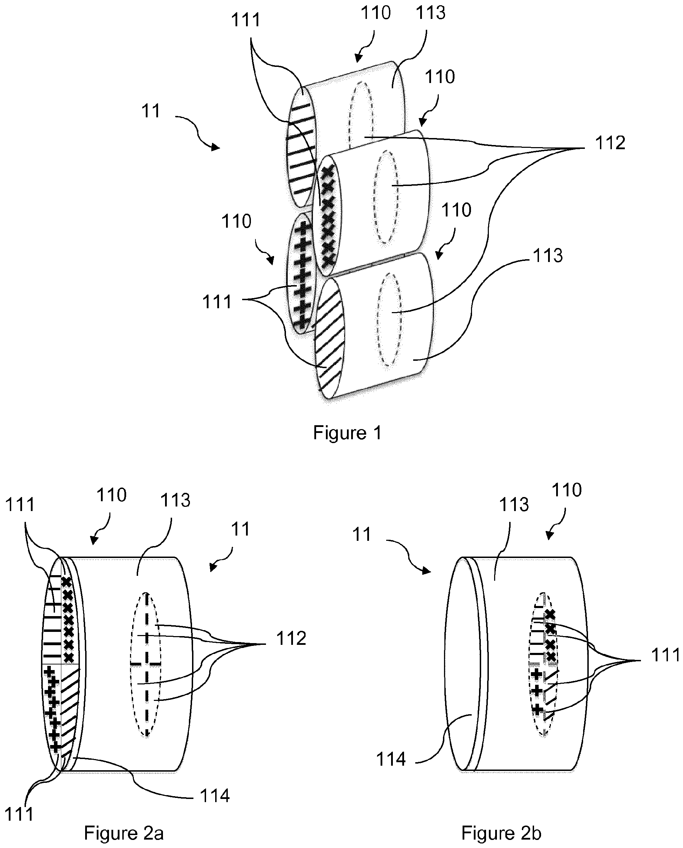

Les moyens de démultiplexage 11 comprennent un ou plusieurs détecteurs 110 présentant un nombre n2 de filtres optiques 111 et d'éléments actifs 112 correspondant au nombre n1 de longueurs d'ondes. Chaque élément actif 112 est agencé pour détecter sélectivement une longueur d'onde parmi lesdites longueurs d'ondes à dissocier via un filtre optique 111. L'élément actif 112 est distinct du filtre optique. En d'autres mots, dans les variantes représentées sur les figures 1,2a,2b, l'élément actif 112 définit une pièce qui est séparé physiquement du filtre optique 111 avant le montage de l'élément actif 112 et du filtre optique dans le détecteur. Après son montage, l'élément optique 112 et le filtre optique 111 sont toujours séparés physiquement et considérés comme distincts. Le filtre optique 111 est alors en contact de l'élément actif 112 (figure 2b) ou d'un moyen de protection 114 qui est interposé entre le filtre optique 111 et l'élément actif 112 (figure 2a). Lorsque le filtre optique 111 est déposé sur le moyen de protection 114, ce moyen de protection 114 renferme le boitier 113. Autrement dit, le filtre optique 111 est déposé sur l'élément actif 112 ou sur le moyen de protection 114. En particulier, le filtre optique 111 étant déposé sur l'élément actif 112 ou sur le moyen de protection 114, il en résulte une simplification de construction et une dépendance angulaire moins forte qui pourrait être due à des sollicitations extérieures.

Suite au filtrage des longueurs d'ondes par le filtre optique 111, l'élément actif 112 agit pour convertir le signal optique à une longueur d'onde donnée en un signal électrique. Le signal électrique peut ensuite être traité pour récupérer l'information transmise.

Suivant le mode de réalisation représenté sur les figures 1 et 2a, l'élément actif 112 comprend un moyen de protection 114, classiquement appelée vitre de protection. Dans ce cas, le filtre optique 111 est déposé au contact de ce moyen de protection 114. Le moyen de protection 114 est agencé pour refermer le boitier 113. Le moyen de protection 114 peut être inclus dans le boitier 113 comprenant l'élément actif 112. Alternativement, comme montré sur la figure 2a, le moyen de protection 114 est fixé sur le bord du boitier 113 de manière à ne pas être inclus dans le boitier et à refermer l'ouverture du boitier 113 dans lequel l'élément actif 112 est compris. Cette structure est avantageuse en ce qu'elle permet de ne pas endommager l'élément actif 112 lors d'un procédé de dépôt par plasma qui est un procédé d'assemblage préférentiel pour le dépôt des filtres optiques 111. Ce moyen de protection permet par ailleurs d'éviter le problème d'accrochage des couches minces sur l'élément actif 112. Sont par exemple définies comme couches minces des couches ayant des épaisseurs comprises entre 100 nanomètres et 1 micromètre.

Dans un mode de réalisation, le moyen de protection 114 est configuré de sorte que l'énergie d'une onde lumineuse ayant la longueur d'onde sélectionnée (λ1... λn) via le filtre optique 111 et répartie sur une première surface du filtre optique 111, est concentrée sur une surface de l'élément actif 112 relativement plus petite que ladite première surface. En d'autres termes, le moyen de protection 114 comprend un moyen de concentration de la lumière reçue par l'élément actif 112. Lorsque le détecteur 110 comprend une pluralité de filtres optiques 111 associée avec une pluralité d'éléments actifs 112 comprise dans le boitier 113 (figure 2a et 2b), le moyen de protection 114 peut comprendre plusieurs portions en regard des filtres optiques 111 répartis sur le moyen de protection 114 pour concentrer l'onde lumineuse de chacune des longueurs d'ondes sélectionnées (λ1... λn) sur les éléments actifs correspondants 112. Chacune des portions de ce moyen de protection 114 est alors propre à concentrer l'énergie répartie sur la première surface du filtre optique 111 sur la deuxième surface de l'élément actif 112 correspondant. Alternativement, lorsque le dispositif comprend une pluralité de détecteurs 110 comprenant chacun un unique filtre optique 111 associé avec un unique élément actif compris chacun dans un boitier 113 (figure 1), un ou chacun des moyens de protection 114 comprend une unique portion configurée de sorte que l'énergie d'une onde lumineuse ayant la longueur sélectionnée (λ1... λn) via le filtre optique 111 et répartie sur une première surface du filtre optique 111 est concentrée sur une deuxième surface de l'élément actif 112 relativement plus petite que ladite première surface. Cette configuration permet avantageusement d'augmenter la puissance du signal détecté, en particulier dans un environnement dynamique.

Préférentiellement, les éléments actifs 112 sont des photodiodes.

Dans un mode de réalisation représentée sur les figures 1 et 2, les filtres optiques 111 sont constitués par un empilement de couches minces déposées sur l'élément actif 112 ou sur le moyen de protection 114 refermant ledit boitier 113.

Dans un mode de réalisation représenté sur la figure 1, les moyens de démultiplexage 11 comprennent une pluralité de détecteurs 110 comprenant un boitier 113 dans lequel un unique filtre optique 111 est associé avec un unique élément actif 112. De préférence, les éléments actifs 112 sont constitués par des photodiodes à surface de conversion unique, chacun des filtres optiques 111 ayant une capacité de sélection d'une longueur d'onde prédéterminée. A titre d'exemple, la figure 1 illustre quatre filtres optiques 111 et quatre éléments actifs 112 distincts les uns des autres. Chacun des filtres optiques 111 ne filtrant qu'une de ces quatre longueurs d'ondes. Un premier filtre optique 111 ne filtre que λ1, un deuxième filtre optique 111 ne filtre que λ2, une troisième filtre optique 111 ne filtre que λ3, une quatrième filtre optique 111 ne filtre que λ4 etc... Le nombre de détecteurs 110 peut être adapté en fonction du nombre de longueurs d'ondes n1 à dissocier. En particulier, le nombre de détecteurs 110 équipé d'un seul filtre optique 111 et d'un seul élément actif 112 peut être adapté au nombre d'émetteur 21 du deuxième dispositif 20 de communication optique représenté sur la figure 9. Il a été constaté que le mode de réalisation de la figure 1 présentait avantageusement une fréquence de coupure plus élevée que les variantes représentées sur les figures 2a et 2b.

Dans les modes de réalisation montrés sur les figure 2a et 2b, le détecteur 110 comprend un boitier commun 113 dans lequel une pluralité de filtres optiques 111 est associé avec une pluralité d'éléments actifs 112. De préférence, la pluralité d'éléments actifs 112 est constituée par une photodiode multi-cadrans rendus sélectifs en longueurs d'ondes par le dépôt d'une pluralité filtres optiques répartis sur le moyen de protection 114 (figure 2a) ou directement sur la photodiode multi-cadrans (figure 2b). Les figures 2a et 2b illustrent, par exemple, une photodiode comprenant une pluralité d'éléments actifs 112. Ces éléments actifs 112 sont répartis dans un boitier 113, par exemple par quartier lorsque le nombre n1 de longueurs d'ondes à dissocier pour un détecteur 110 est égale à quatre. De la même manière que pour le mode de réalisation de la figure 1, sont représentées sur la figure 2a, un premier filtre déposé sur la vitre de protection 114 ne filtrant que λ1, un deuxième filtre déposé sur cette même vitre de protection 114 définissant un deuxième filtre optique 111 ne filtrant que λ2, un troisième filtre déposé sur cette même vitre de protection 114 définissant un troisième filtre optique 111 ne filtrant que λ3 etc. Le nombre de détecteurs 110 équipé de filtres optiques répartis sur le moyen de protection 114 et la pluralité d'éléments actifs constitués par une photodiode multicadrans peut être adapté en fonction du nombre de longueurs d'ondes n1 à dissocier. En particulier, le nombre de détecteurs peut être adapté au nombre d'émetteur 21 du deuxième dispositif 20 de communication optique représenté sur la figure 9.

Comme indiqué ci-dessus, le dispositif 1 est destiné à communiquer avec d'autres dispositifs de communication optique. En particulier, il est avantageusement en communication avec un dispositif de communication optique qui comprend : une pluralité d'émetteurs 21 de lumière adaptés pour émettre le nombre n1 de longueurs d'ondes et des moyens de multiplexage 22 pour confondre lesdites longueurs d'ondes distinctes les unes des autres sur un même axe optique (figure 9). Les longueurs d'ondes sont confondues sur un même axe optique grâce à des moyens connus de l'homme du métier, à savoir une pluralité d'émetteur 21 émettant chacun une longueur d'ondes λ1.. λn, des miroirs dichroïques 23 et un agencement des émetteurs 21 et miroirs dichroïques 23 configurés de sorte à confondre les différentes longueurs émises par le dispositif 20 illustré dans la figure 9. Dans un mode de réalisation illustré sur la figure 3, le dispositif de communication optique selon l'invention comprend aussi une pluralité d'émetteurs 21 de lumière adaptés pour émettre le nombre n1 de longueurs d'ondes et des moyens de multiplexage 22 pour confondre lesdites longueurs d'ondes distinctes les unes des autres sur un même axe optique B.

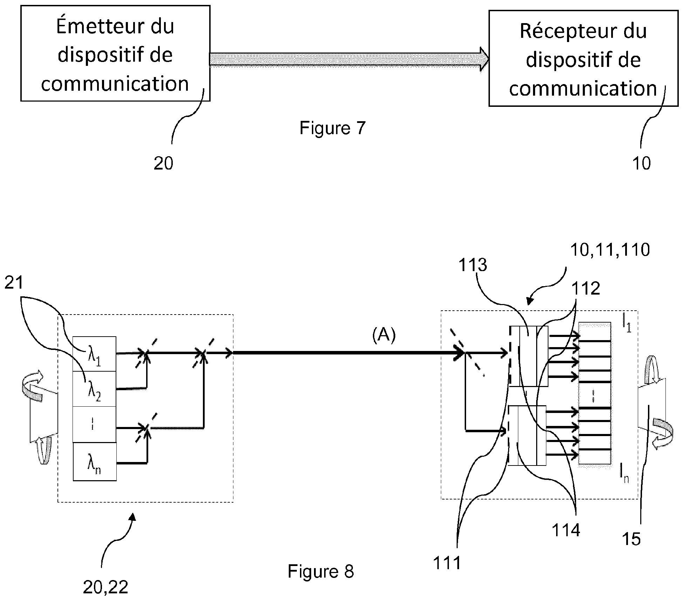

La figure 8 illustre le schéma de fonctionnement d'un dispositif 10 selon l'invention associé à un dispositif 20 de communication émettant des longueurs d'ondes tel que celui représenté sur la figure 9. La figure 3 montre que les émetteurs 21 de longueurs d'ondes qui sont de préférence des lasers, émettent chacun des longueurs d'ondes λ1. λn qui sont confondus sur le même axe optique A via des moyens de multiplexage 22 présentant de préférence l'architecture montrée sur la figure 9. Le nombre n1 de longueurs d'ondes confondus sur l'axe optique A forme un faisceau multi-longueurs d'ondes émis vers le dispositif 10 de communication selon la présente invention. Les moyens de démultiplexage 11 illustrés à titre d'exemple sur les figures 1 et 2 sont agencés de sorte à recevoir le faisceau multi-longueurs d'ondes émis par le dispositif 20 émetteur tel que celui représenté sur la figure 9 afin que les longueurs d'ondes soient dissociées distinctement. En conséquence, en amont des moyens de démultiplexage 11, les longueurs d'ondes sont confondues sur le même axe optique A, et, en aval des moyens de démultiplexage 11, les longueurs d'ondes sont dissociées afin notamment de sélectionner des signaux qui sont utilisés comme flux d'information.

Dans un mode de réalisation, le dispositif 10 de communication comprend un premier dispositif de balayage 15 configuré de sorte à détecter la présence d'un deuxième dispositif 20 de communication optique (voir par exemple figure 9) comprenant une pluralité d'émetteurs 21 de lumière adaptés pour émettre le nombre n1 de longueurs d'ondes distinctes les unes des autres et des moyens de multiplexage 22 pour confondre lesdites longueurs d'ondes sur le même axe optique A. Les moyens de démultiplexage 11 sont fixés sur le premier dispositif de balayage 15 et sont configurés pour dissocier les longueurs d'ondes dudit deuxième dispositif 20 de communication optique.

Figure 3, lorsque le dispositif de communication 10 comprend en plus une pluralité d'émetteurs 21 de lumière adaptés pour émettre ledit nombre n1 de longueurs d'ondes et des moyens de multiplexage 22 pour confondre lesdites longueurs d'ondes distinctes les unes des autres sur un même axe optique B, le dispositif 10 peut en outre comprendre un deuxième dispositif de balayage 16 configuré de sorte à émettre lesdites longueurs d'ondes confondues sur le même axe optique B vers un troisième dispositif 30 de communication optique. Le troisième dispositif 30 de communication comprend des moyens de démultiplexage pour dissocier les longueurs d'ondes issues du dispositif 1.

Comme montré sur la figure 3, le dispositif 10 de communication optique comprenant les moyens de démultiplexage 11 selon l'invention et le dispositif de communication 20 émettant des longueurs d'ondes tel que celui représenté sur la figure 9 peuvent être montés sur un châssis 50 commun. Ce châssis 50 peut être équipé du premier dispositif 15 de balayage ou du deuxième dispositif de balayage 16 en fonction des besoins, à savoir détecter la présence d'un autre dispositif de communication optique ou émettre les longueurs d'ondes confondues vers un autre dispositif de communication optique afin d'orienter le faisceau.

Dans un mode de réalisation, le dispositif de communication optique comprend des moyens de locomotion 60. Ces moyens de locomotion peuvent être des moyens de propulsion, des moyens de traction, tous moyens permettant de déplacer le dispositif par rapport au sol.

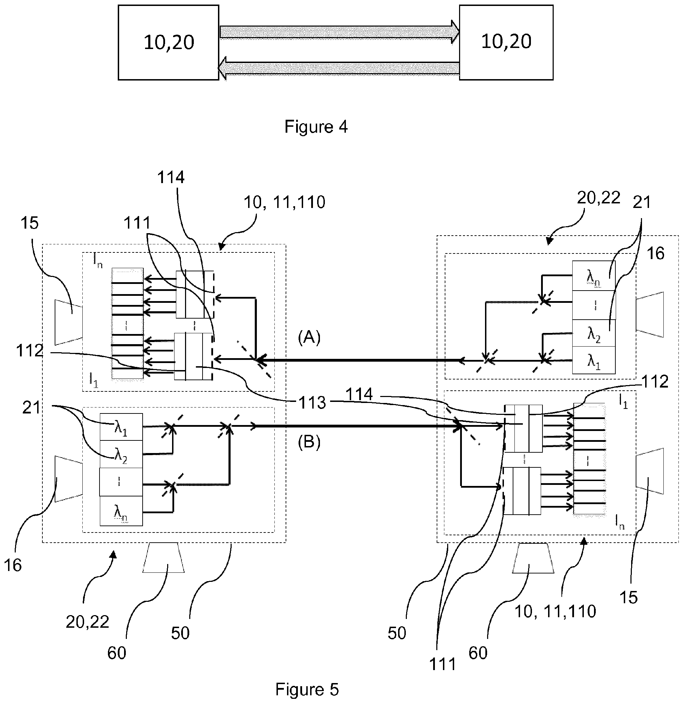

L'orientation des dispositifs de communication 10 optiques qu'ils soient en mode de détection ou d'émission devient impérative dans le cas où il y a plusieurs dispositifs de communication optiques qui sont mobiles les uns par rapport aux autres ce qui est le cas lorsqu'au moins un de ces dispositifs 10 comprend des moyens de locomotion 60. Un exemple d'application de ces dispositifs de communication optique est leur montage sur des drones. Une pluralité de drones équipés chacun ou pour certains d'un dispositif 10 de communication optique constitue alors une formation de drones qui communiquent entre eux. Lorsqu'ils sont équipés du premier dispositif de balayage 15 et/ou du deuxième dispositif de balayage 16, les drones ainsi équipés de dispositifs de communication 10 optique ont la capacité de trouver (ou tracer) les autres drones afin de communiquer avec eux. La solution selon laquelle les moyens de démultiplexage 11 sont agencés selon les configurations représentées sur les figures 1,2a,2b est alors particulièrement avantageuse, car ces moyens de démultiplexage 11 sont moins sensibles aux vibrations et aux mouvements relatifs entre un dispositif 10 qui détecte et un autre dispositif qui émet (voir figures 5 et 8).

La valeur du débit visé par la présente méthode de communication, à savoir supérieure à 1 Gbit/s, impose un rapport signal sur bruit élevé. La puissance optique détectée par le dispositif 10 est donc maximisée via la présence d'un premier 15 et/ou deuxième dispositif de balayage 16. Les pertes en espace libre sont minimisées grâce à l'agencement de ces premier 15 et/ou deuxième dispositifs de balayage 16 équipant le dispositif 10 qui nécessite une transmission en faible divergence. Par ailleurs, de tels dispositifs de communication optiques sont contraints par des aspects sanitaires. Plus précisément, en cas de présence humaine à proximité des dispositifs de communication optique, en particulier lorsqu'ils sont mobiles, il est impératif de limiter la puissance émise par les émetteurs de longueurs d'ondes afin de respecter les normes de sécurité oculaires en vigueur. La puissance requise pour les émetteurs de longueurs d'ondes est en conséquence moindre.

Dans un mode de réalisation préféré, le premier dispositif de balayage 15 et le deuxième dispositif de balayage 16 comprennent des actionneurs élémentaires multistables configurés pour être contrôlés électriquement par une unité de commande. Ces actionneurs sont avantageux car ils présentent une stabilité mécanique intrinsèque. Le dispositif peut en outre comprendre un module de communication comprenant :
- une première fonction de recherche d'une communication avec un autre dispositif de communication optique 10,20,30, durant laquelle les actionneurs élémentaires multistables dudit premier dispositif de balayage 15 et dudit deuxième dispositif de balayage 16 sont mobiles,
- une deuxième fonction de sommeil, lorsque la communication est établie, durant laquelle les actionneurs élémentaires multistables sont immobiles.

Cet agencement présente l'avantage de consommer la juste quantité d'énergie au moment opportun, à savoir durant la recherche de la communication avec un autre dispositif de communication optique.

Dans un deuxième objet de l'invention représenté sur les figures 7 et 8, est aussi visé un système qui comprend :
- au moins le dispositif 10 de communication optique selon un des modes de réalisation précité,
- le deuxième dispositif 20 de communication optique comprenant la pluralité d'émetteurs 21 de lumière adaptés pour émettre le nombre n1 de longueurs d'ondes distinctes les unes des autres et les moyens de multiplexage 22 pour confondre lesdites longueurs d'ondes sur le même axe optique A.

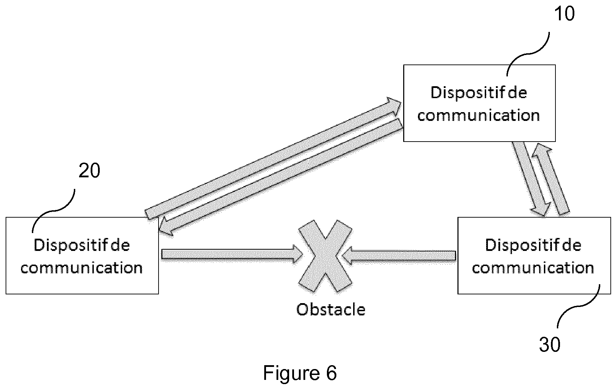

Dans un troisième objet de l'invention illustré schématiquement sur la figure 6, est aussi visé au moins un système qui comprend :
- le premier dispositif 10 de communication optique selon un des modes de réalisation précitée dans lequel le dispositif 10 de communication optique comprend une pluralité d'émetteurs 21 de lumière adaptés pour émettre ledit nombre n1 de longueurs d'ondes et des moyens de multiplexage 22 pour confondre lesdites longueurs d'ondes distinctes les unes des autres sur le même axe optique B,
- un deuxième dispositif 20 de communication optique comprenant une pluralité d'émetteurs de lumière adaptés pour émettre le nombre n1 de longueurs d'ondes distinctes les unes des autres et des moyens de multiplexage pour confondre lesdites longueurs d'ondes sur le même axe optique A.
- un troisième dispositif 30 de communication optique comprenant des moyens de démultiplexage pour dissocier distinctement le nombre n1 de longueurs d'ondes les unes des autres,
ledit troisième dispositif 30 étant configuré pour détecter lesdites longueurs d'ondes émises par ledit premier ou deuxième dispositif 10,20 de communication optique.

Avantageusement, cela permet de faire fonctionner les dispositifs 10, 20, 30 de communication optique en réseau de façon à minimiser la puissance optique des dispositifs qui sont équipés d'émetteurs. En effet, un dispositif de communication optique ne communique pas nécessairement directement avec tous les autres systèmes, mais seulement avec ceux se trouvant à proximité ou ceux avec lesquels le dispositif n'est pas séparé par un obstacle sur le trajet optique le plus direct entre les deux dispositifs de communication optique. En figure 6, est montré un système ou réseau de dispositifs de communication optique dans lequel deux dispositifs 20,30 de communication optique nécessite de communiquer via un autre dispositif de communication 10 optique, car les deux dispositifs 20,30 sont séparés par un obstacle situé sur le trajet optique. Ce principe fonctionne également lorsqu'un dispositif de communication 20 veut établir une communication avec un autre dispositif de communication 30 optique qui est hors de portée ; dans ce cas, il pourra établir une communication indirecte avec le dispositif de communication 30 qui est hors de portée via le dispositif de communication 10 optique qui est situé par exemple entre les deux dispositifs de communication 20,30 précités. Un protocole d'identification pourra être mis en oeuvre dans le cas d'un réseau comprenant une multiplicité de dispositifs de communication optique.

Equipés des dispositifs 10 de communication optique selon l'invention, ces systèmes présentent plusieurs avantages tels qu'un débit de communication important qui peut dépasser le Gbit/s, le bas coût des composants optiques utilisés pour les transmissions fibrées et pour l'éclairage et la sécurité des données transmises via la transmission en faible divergence et la plage de longueurs d'ondes utilisées, la sécurité des données étant accrue si un protocole d'identification est mis en oeuvre. Par exemple, dans le cas de l'utilisation d'un tel système dans un environnement domestique, il est difficile voire impossible de détecter le signal transmis depuis une pièce qui se situe à l'extérieur de la pièce dans laquelle un dispositif 10 de communication optique est situé, ces pièces étant séparées par un mur constituant un obstacle.

En ce qui concerne la sécurité des données transmises, et en particulier la confidentialité et l'intégrité des données transmises, il est possible de coder le signal en combinant lesdites longueurs d'ondes. Une telle disposition permet avantageusement de crypter les données. La combinaison prédéterminée de ces longueurs d'ondes permet la transmission de mots binaires plutôt que de simples trains de bits. Plus précisément, l'utilisation de tables de correspondances permet de retrouver la signification du signal une fois celui-ci détecté par les moyens de démultiplexage 11. Dans un mode de réalisation, il est possible de moduler (notamment en amplitude ou de manière temporelle) le signal optique émis par les moyens de multiplexage 22 afin d'atteindre des objectifs de transmission à hauts débits ou de transmission sécurisée selon l'application visée.

Dans un mode de réalisation, l'ensemble des dispositifs de communication optique 10,20,30 comprend des moyens de locomotion 60 respectifs de sorte à les rendre mobiles entre eux.

Suivant un quatrième objet de l'invention, est également visé un procédé de communication optique en espace libre multiplexé en longueurs d'ondes comprises entre 400 nm et 1600 nm comprenant les étapes suivantes :
- émission, par le deuxième dispositif 20 de communication optique, d'un nombre n1 de longueurs d'ondes confondues sur le même axe optique A,
- détection, par le premier dispositif 10 de communication optique, du nombre n1 de longueurs d'ondes au moyen d'un ou plusieurs détecteurs 110 comprenant un nombre de filtres optiques 111 et d'éléments actifs 112 correspondant au nombre n1 de longueurs d'ondes, chaque élément actif 112 étant agencé pour détecter sélectivement une longueur d'onde parmi lesdites longueurs d'ondes via un filtre optique 111 distinct de l'élément actif 112 lequel est compris dans un boitier 113, le filtre optique étant au contact de l'élément actif ou du moyen de protection 114 interposé entre le filtre optique 111 et l'élément actif 112, ledit moyen de protection 114 refermant ledit boitier 113.

Dans un mode de réalisation, le procédé comprend en outre les étapes suivantes :
- émission, par ledit premier dispositif 10, du nombre n1 de longueurs d'ondes vers le troisième dispositif 30 de communication optique,
- détection, par ledit deuxième et/ou troisième dispositif 20,30 de communication optique, du nombre n1 de longueurs d'ondes.

Dans un mode de réalisation, le premier dispositif 10, le deuxième dispositif 20 et le troisième dispositif 30 sont mobiles entre eux, le procédé comprenant en outre les étapes suivantes :
- détection par balayage, par le premier dispositif 10, de la présence du deuxième dispositif 10 de communication optique,
- détection par balayage, par le troisième dispositif 30, de la présence du premier dispositif 10.

Dans un mode de réalisation, le balayage est effectué au moyen d'actionneurs multistables contrôlés par une unité de commande, le procédé comprenant lors la détection par balayage, par le premier dispositif 10, de la présence d'au moins un des deuxième et troisième dispositifs 20,30 de communication optique, des étapes consistant à :
- mouvoir les actionneurs bistables jusqu'à l'établissement d'une communication avec l'au moins un des deuxième et troisième dispositifs 20,30 de communication optique,
- maintenir immobiles les actionneurs bistables lorsque la détection par le premier dispositif 10 de communication du nombre n1 de longueurs d'ondes émises par l'au moins un des deuxième et troisième dispositifs 20,30 de communication optique est terminée,
- mouvoir de nouveau les actionneurs bistables après une durée prédéterminée.

## Revendications

1. Dispositif de communication (10) optique en espace libre, multiplexé en longueurs d'ondes comprises entre 400 nm et 1600 nm, ledit dispositif comprenant des moyens de démultiplexage (11) configurés de sorte à dissocier distinctement un nombre n1 de longueurs d'ondes les unes des autres, les moyens de démultiplexage (11) comprenant un ou plusieurs détecteurs (110) présentant un nombre n2 de filtres optiques (111) et d'éléments actifs (112) correspondant au nombre n1 de longueurs d'ondes, chaque élément actif (112) étant arrangé pour détecter sélectivement une longueur d'onde parmi lesdites longueurs d'ondes (λ1... λn) via un filtre optique (111) distinct de l'élément actif (112) lequel est compris dans un boitier (113),
**caractérisé en ce que** le filtre optique (111) est au contact d'un moyen de protection (114) interposé entre le filtre optique (111) et l'élément actif (112), ledit moyen de protection (114) refermant ledit boitier (113).

2. Dispositif (10) selon la revendication 1, **caractérisé en ce que** chaque filtre optique (111) est constitué par un empilement de couches minces déposées sur le moyen de protection (114).

3. Dispositif (10) selon l'une quelconque des revendications précédentes, **caractérisé en ce que** les moyens de démultiplexage (11) comprennent :
- un détecteur (110) comprenant une pluralité de filtres optiques (111) associée avec une pluralité d'éléments actifs (112) comprise dans le boitier (113), et/ou,
- une pluralité de détecteurs (110) comprenant chacun un unique filtre optique (111) associé avec un unique élément actif compris chacun dans un boitier (113).

4. Dispositif (10) selon l'une quelconque des revendications précédentes, **caractérisé en ce que** les éléments actifs (112) sont des photodiodes.

5. Dispositif (10) selon l'une quelconque des revendications précédentes, **caractérisé en ce qu'**il comprend un premier dispositif de balayage (15) configuré de sorte à détecter la présence d'un deuxième dispositif (20) de communication optique comprenant une pluralité d'émetteurs de lumière adaptés pour émettre le nombre n1 de longueurs d'ondes distinctes les unes des autres et des moyens de multiplexage (22) pour confondre lesdites longueurs d'ondes sur un même axe optique A, lesdits moyens de démultiplexage (11) étant fixés sur le premier dispositif de balayage (15) et étant configurés pour dissocier les longueurs d'ondes dudit deuxième dispositif (20) de communication optique.

6. Dispositif (10) selon la revendication 5, **caractérisé en ce qu'**il comprend des moyens de locomotion (60).

7. Dispositif (10) selon l'une quelconque des revendications précédentes, **caractérisé en ce que** le moyen de protection (114) est configuré de sorte que l'énergie d'une onde lumineuse ayant la longueur d'onde sélectionnée (λ1... λn) via le filtre optique (111) et répartie sur une première surface du filtre optique (111) est concentrée sur une surface de l'élément actif (112) relativement plus petite que ladite première surface.

8. Dispositif (10) selon l'une quelconque des revendications 5 à 7, **caractérisé en ce qu'**il comprend :
- une pluralité d'émetteurs (21) de lumière adaptés pour émettre ledit nombre n1 de longueurs d'ondes,
- des moyens de multiplexage (22) pour confondre lesdites longueurs d'ondes distinctes les unes des autres sur un même axe optique B.

9. Dispositif (10) selon la revendication 8, **caractérisé en ce qu'**il comprend un deuxième dispositif de balayage (16) configuré de sorte à émettre lesdites longueurs d'ondes confondues sur le même axe optique B vers un troisième dispositif (30) de communication optique comprenant des moyens de démultiplexage (11) pour dissocier lesdites longueurs d'ondes, les moyens de multiplexage (22) dudit dispositif de communication optique étant fixés sur le deuxième dispositif de balayage.

10. Dispositif (10) selon les revendications 5 et 9, **caractérisé en ce que** le premier dispositif de balayage (15) et le deuxième dispositif de balayage (16) comprennent des actionneurs élémentaires multistables configurés pour être contrôlés électriquement par une unité de commande et **en ce que** le dispositif comprend un module de communication comprenant :
- une première fonction de recherche d'une communication avec un autre dispositif de communication optique, durant laquelle les actionneurs élémentaires multistables dudit premier dispositif de balayage (15) et dudit deuxième dispositif de balayage sont mobiles,
- une deuxième fonction de sommeil, lorsque la communication est établie, durant laquelle les actionneurs élémentaires multistables sont immobiles.

11. Système **caractérisé en ce qu'**il comprend :
- au moins un dispositif de communication (10) optique selon l'une quelconque des revendications 1 à 7,
- un deuxième dispositif (20) de communication optique comprenant une pluralité d'émetteurs (21) de lumière adaptés pour émettre le nombre n1 de longueurs d'ondes distinctes les unes des autres et des moyens de multiplexage (22) pour confondre lesdites longueurs d'ondes sur un même axe optique.

12. Système **caractérisé en ce qu'**il comprend :
- au moins un premier dispositif de communication optique selon l'une quelconque des revendications 8 à 10,
- un deuxième dispositif (20) de communication optique comprenant une pluralité d'émetteurs (21) de lumière adaptés pour émettre le nombre n1 de longueurs d'ondes distinctes les unes des autres et des moyens de multiplexage (22) pour confondre lesdites longueurs d'ondes sur un même axe optique A,
- un troisième dispositif (30) de communication optique comprenant des moyens de démultiplexage (11) pour dissocier distinctement le nombre n1 de longueurs d'ondes les unes des autres,
ledit troisième dispositif (30) étant configuré pour détecter lesdites longueurs d'ondes émises par ledit premier ou deuxième dispositif (10,20) de communication optique.

13. Système selon l'une quelconque des revendications 11 ou 12, **caractérisé en ce que** l'ensemble des dispositifs (10,20,30) de communication optique comprend des moyens de locomotion respectifs de sorte à les rendre mobiles entre eux.

14. Procédé de communication optique en espace libre multiplexé en longueurs d'ondes comprises entre 400 nm et 1600 nm comprenant les étapes suivantes :
- émission, par un deuxième dispositif (20) de communication optique, d'un nombre n1 de longueurs d'ondes confondues sur un même axe optique A,
- détection, par un premier dispositif (10) de communication optique, du nombre n1 de longueurs d'ondes au moyen d'un ou plusieurs détecteurs (110) présentant un nombre n2 de filtres optiques (111) et d'éléments actifs correspondant au nombre n1 de longueurs d'ondes, chaque élément actif étant arrangé pour détecter sélectivement une longueur d'onde parmi lesdites longueurs d'ondes via un filtre optique (111) distinct de l'élément actif (112) lequel est compris dans un boitier (113), **caractérisé en ce que** le filtre optique est au contact d'un moyen de protection (114) interposé entre le filtre optique (111) et l'élément actif (112), ledit moyen de protection (114) refermant ledit boitier (113).

15. Procédé selon la revendication 14, **caractérisé en ce qu'**il comprend les étapes suivantes :
- émission, par ledit premier dispositif (10), du nombre n1 de longueurs d'ondes vers un troisième dispositif (30) de communication optique,
- détection, par ledit deuxième et/ou troisième dispositif (20,30) de communication optique, du nombre n1 de longueurs d'ondes.

16. Procédé selon la revendication 15, **caractérisé en ce que** le premier dispositif (10), le deuxième dispositif (20) et le troisième dispositif (30) sont mobiles entre eux, le procédé comprenant en outre les étapes suivantes :
- détection par balayage, par le premier dispositif (10), de la présence du deuxième dispositif (20) de communication optique,
- détection par balayage, par le troisième dispositif (30), de la présence du premier dispositif (10).

17. Procédé selon la revendication 16, **caractérisé en ce que** le balayage est effectué au moyen d'actionneurs multistables contrôlés par une unité de commande, le procédé comprenant lors de la détection par balayage, par le premier dispositif (10), de la présence d'au moins un des deuxième et troisième dispositifs (20,30) de communication optique, des étapes consistant à :
- mouvoir les actionneurs multistables jusqu'à l'établissement d'une communication avec l'au moins un des deuxième et troisième dispositifs (20,30) de communication optique,
- maintenir immobiles les actionneurs multistables lorsque la détection par le premier dispositif de communication du nombre n1 de longueurs d'ondes émises par l'au moins un des deuxième et troisième dispositifs (20,30) de communication optique est terminée,
- mouvoir de nouveau les actionneurs multistables après une durée prédéterminée.

## Patentansprüche

1. Vorrichtung (10) zur optischen Freiraumkommunikation, die wellenlängengemultiplext zwischen 400 nm und 1600 nm ist, wobei die Vorrichtung Demultiplexmittel (11) umfasst, die eingerichtet sind, um eine Anzahl n1 von Wellenlängen getrennt voneinander zu unterscheiden, wobei die Demultiplexmittel (11) einen oder mehrere Detektoren (110) umfassen, der eine Anzahl n2 von optischen Filtern (111) und von aktiven Elementen (112) aufweist, die der Anzahl n1 von Wellenlängen entspricht, wobei jedes aktive Element (112) dazu vorgesehen ist, selektiv eine Wellenlänge unter den Wellenlängen (λ1 ... λn) über einen optischen Filter (111), der von dem aktiven Element (112) getrennt ist, welcher in einem Gehäuse (113) angeordnet ist, zu erfassen,
**dadurch gekennzeichnet, dass** der optische Filter (111) mit einem Schutzmittel (114) in Kontakt ist, das zwischen dem optischen Filter (111) und dem aktiven Element (112) zwischengefügt ist, wobei das Schutzmittel (114) das Gehäuse (113) verschließt.

2. Vorrichtung (10) nach Anspruch 1, **dadurch gekennzeichnet, dass** jeder optische Filter (111) von einer Stapelung von dünnen Schichten gebildet ist, die auf das Schutzmittel (114) aufgebracht sind.

3. Vorrichtung (10) nach einem der vorhergehenden Ansprüche, **dadurch gekennzeichnet, dass** die Demultiplexmittel (11) umfassen:
- einen Detektor (110), umfassend eine Vielzahl von optischen Filtern (111), die einer Vielzahl von aktiven Elementen (112), die in dem Gehäuse (113) enthalten sind, zugeordnet ist, und/oder
- eine Vielzahl von Detektoren (110), jeweils umfassend einen einzigen optischen Filter (111), der einem einzigen aktiven Element, das jeweils in einem Gehäuse (113) enthalten ist, zugeordnet ist.

4. Vorrichtung (10) nach einem der vorhergehenden Ansprüche, **dadurch gekennzeichnet, dass** die aktiven Elemente (112) Photodioden sind.

5. Vorrichtung (10) nach einem der vorhergehenden Ansprüche, **dadurch gekennzeichnet, dass** sie eine erste Abtastvorrichtung (15) umfasst, die eingerichtet ist, um das Vorhandensein einer zweiten optischen Kommunikationsvorrichtung (20) zu erfassen, umfassend eine Vielzahl von Lichtsendern, die dazu vorgesehen sind, die Anzahl n1 von zueinander verschiedenen Wellenlängen zu entsenden, und Multiplexmittel (22), um die Wellenlängen auf einer selben optischen Achse A zusammenzulegen, wobei die Demultiplexmittel (11) auf der ersten Abtastvorrichtung (15) befestigt und eingerichtet sind, um die Wellenlängen der zweiten optischen Kommunikationsvorrichtung (20) zu unterscheiden.

6. Vorrichtung (10) nach Anspruch 5, **dadurch gekennzeichnet, dass** sie Fortbewegungsmittel (60) umfasst.

7. Vorrichtung (10) nach einem der vorhergehenden Ansprüche, **dadurch gekennzeichnet, dass** das Schutzmittel (114) eingerichtet ist, dass die Energie einer Lichtwelle mit der über den optischen Filter (111) ausgewählten Wellenlänge (λ1 ... λn), die auf einer ersten Fläche des optischen Filters (111) verteilt ist, auf einer relativ kleineren Fläche des aktiven Elements (112) als die erste Fläche konzentriert ist.

8. Vorrichtung (10) nach einem der Ansprüche 5 bis 7, **dadurch gekennzeichnet, dass** sie umfasst:
- eine Vielzahl von Lichtsendern (21), die dazu vorgesehen sind, die Anzahl n1 von Wellenlängen zu entsenden,
- Multiplexmittel (22), um die zueinander verschiedenen Wellenlängen auf einer selben optischen Achse B zusammenzulegen.

9. Vorrichtung (10) nach Anspruch 8, **dadurch gekennzeichnet, dass** sie eine zweite Abtastvorrichtung (16) umfasst, die eingerichtet ist, um die auf derselben optischen Achse B zusammengelegten Wellenlängen zu einer dritten optischen Kommunikationsvorrichtung (30) zu entsenden, umfassend Demultiplexmittel (11), um die Wellenlängen zu unterscheiden, wobei die Multiplexmittel (22) der optischen Kommunikationsvorrichtung auf der zweiten Abtastvorrichtung befestigt sind.

10. Vorrichtung (10) nach den Ansprüchen 5 und 9, **dadurch gekennzeichnet, dass** die erste Abtastvorrichtung (15) und die zweite Abtastvorrichtung (16) multistabile elementare Aktuatoren umfassen, die eingerichtet sind, um elektrisch von einer Steuereinheit kontrolliert zu werden, und dass die Vorrichtung ein Kommunikationsmodul umfasst, umfassend:
- eine erste Suchfunktion einer Kommunikation mit einer anderen optischen Vorrichtung, während der die multistabilen elementaren Aktuatoren der ersten Abtastvorrichtung (15) und der zweiten Abtastvorrichtung beweglich sind,
- eine zweite Schlaffunktion, wenn die Kommunikation hergestellt ist, während der die multistabilen elementaren Aktuatoren unbeweglich sind.

11. System, **dadurch gekennzeichnet, dass** es umfasst:
- mindestens eine optische Kommunikationsvorrichtung (10) nach einem der Ansprüche 1 bis 7,
- eine zweite optische Kommunikationsvorrichtung (20), umfassend eine Vielzahl von Lichtsendern (21), die dazu vorgesehen sind, die Anzahl n1 von zueinander verschiedenen Wellenlängen zu entsenden, und Multiplexmittel (22), um die Wellenlängen auf einer selben optischen Achse zusammenzulegen.

12. System, **dadurch gekennzeichnet, dass** es umfasst:
- mindestens eine erste optische Kommunikationsvorrichtung nach einem der Ansprüche 8 bis 10,
- eine zweite optische Kommunikationsvorrichtung (20), umfassend eine Vielzahl von Lichtsendern (21), die dazu vorgesehen sind, die Anzahl n1 von zueinander verschiedenen Wellenlängen zu entsenden, und Multiplexmittel (22), um die Wellenlängen auf einer selben optischen Achse A zusammenzulegen,
- eine dritte optische Kommunikationsvorrichtung (30), umfassend Demultiplexmittel (11), um die Anzahl n1 von Wellenlängen getrennt voneinander zu unterscheiden,
wobei die dritte Vorrichtung (30) eingerichtet ist, um die von der ersten oder zweiten optischen Kommunikationsvorrichtung (10, 20) entsandten Wellenlängen zu erfassen.

13. System nach einem der Ansprüche 11 oder 12, **dadurch gekennzeichnet, dass** die Gesamtheit der optischen Kommunikationsvorrichtungen (10, 20, 30) jeweilige Fortbewegungsmittel umfasst, um sie untereinander beweglich zu machen.

14. Verfahren zur optischen Freiraumkommunikation, die wellenlängengemultiplext zwischen 400 nm und 1600 nm ist, umfassend die folgenden Schritte:
- durch eine zweite optische Kommunikationsvorrichtung (20) Senden einer Anzahl n1 von Wellenlängen, die auf einer selben optischen Achse A zusammenfallen,
- durch eine erste optische Kommunikationsvorrichtung (10) Erfassen der Anzahl n1 von Wellenlängen mit Hilfe eines oder mehrerer Detektoren (110), die eine Anzahl n2 von optischen Fasern (111) aufweisen, und von aktiven Elementen, die der Anzahl n1 von Wellenlängen entsprechen, wobei jedes aktive Element eingerichtet ist, um selektiv eine Wellenlänge unter den Wellenlängen über einen optischen Filter (111), der von dem aktiven Element (112) getrennt ist, welcher in einem Gehäuse (113) angeordnet ist, zu erfassen, wobei der optische Filter mit einem Schutzmittel (114) in Kontakt ist, das zwischen dem optischen Filter (111) und dem aktiven Element (112) zwischengefügt ist, wobei das Schutzmittel (114) das Gehäuse (113) verschließt.

15. Verfahren nach Anspruch 14, **dadurch gekennzeichnet, dass** es die folgenden Schritte umfasst:
- durch die erste Vorrichtung (10) senden der Anzahl n1 von Wellenlängen zu einer dritten optischen Kommunikationsvorrichtung (30),
- durch die zweite und/oder dritte optische Kommunikationsvorrichtung (20, 30) Erfassen der Anzahl n1 von Wellenlängen.

16. Verfahren nach Anspruch 15, **dadurch gekennzeichnet, dass** die erste Vorrichtung (10), die zweite Vorrichtung (20) und die dritte Vorrichtung (30) untereinander beweglich sind, wobei das Verfahren ferner die folgenden Schritte umfasst:
- Erfassen durch Abtasten durch die erste Vorrichtung (10) des Vorhandenseins der zweiten optischen Kommunikationsvorrichtung (20),
- Erfassen durch Abtasten durch die dritte Vorrichtung (30) des Vorhandenseins der ersten Vorrichtung (10).

17. Verfahren nach Anspruch 16, **dadurch gekennzeichnet, dass** das Abtasten mit Hilfe von multistabilen Aktuatoren erfolgt, die von einer Steuereinheit kontrolliert werden, wobei das Verfahren beim Erfassen durch Abtasten durch die erste Vorrichtung (10) des Vorhandenseins mindestens eines der zweiten und dritten optischen Kommunikationsvorrichtungen (20, 30) Schritte umfasst, darin bestehend:
- die multistabilen Aktuatoren bis zur Herstellung einer Kommunikation mit mindestens einer der zweiten und dritten optischen Kommunikationsvorrichtungen (20, 30) zu bewegen,
- die multistabilen Aktuatoren unbeweglich zu halten, wenn die Erfassung, durch die erste Kommunikationsvorrichtung, der Anzahl n1 von Wellenlängen, die von der mindestens einen der zweiten und dritten optischen Kommunikationsvorrichtungen (20, 30) entsandt werden, beendet ist,
- die multistabilen Aktuatoren nach einer vorbestimmten Dauer wieder zu bewegen.

## Claims

1. An optical communication device (10) in free space, multiplexed in wavelengths comprised between 400 nm and 1,600 nm, said device comprising demultiplexing means (11) configured so as to distinctly dissociate a number n1 of wavelengths from each other, the demultiplexing means (11) comprising one or several detectors (110) having a number n2 of optical filters (111) and active elements (112) corresponding to the number n1 of wavelengths, each active element (112) being arranged for selectively detecting a wavelength from among said wavelengths (λ1... λn) via an optical filter (111) distinct from the active element (112) which is comprised in a casing (113),
**characterized in** the the optical filter (111) is in contact with a protective means (114) interposed between the optical filter (111) and the active element (112), said protective means (114) containing said casing (113).

2. The device (10) according to claim 1, **characterized in that** each optical filter (111) is formed by a stack of thin layers deposited on the protective means (114).

3. The device (10) according to any one of the preceding claims, **characterized in that** the demultiplexing means (11) comprise:
- a detector (110) comprising a plurality of optical filters (111) associated with a plurality of active elements (112) comprised in the casing (113), and/or
- a plurality of detectors (110) each comprising a single optical filter (111) associated with a single active element each comprised in a casing (113).

4. The device (10) according to any one of the preceding claims, **characterized in that** the active elements (112) are photodiodes.

5. The device (10) according to any one of the preceding claims, **characterized in that** it comprises a first scanning device (15) configured so as to detect the presence of a second optical communication device (20) comprising a plurality of light emitters adapted for emitting the number n1 of wavelengths distinct from each other and multiplexing means (22) for causing said wavelengths to coincide on a same optical axis A, said demultiplexing means (11) being fixed on the first scanning device (15) and being configured for dissociating the wavelengths of said second optical communication device (20).

6. The device (10) according to claim 5, **characterized in that** it comprises locomotion means (60).

7. The device (10) according to any one of the preceding claims, **characterized in that** the protective means (114) is configured so that the energy of a light wave having the selected wavelength (λ1... λn) via the optical filter (111) and distributed on a first surface of the optical filter (111) is concentrated on a surface of the active element (112) relatively smaller than said first surface.

8. The device (10) according to any one of claims 5 to 7, **characterized in that** it comprises:
- a plurality of light emitters (21) adapted for emitting said number n1 of wavelengths,
- multiplexing means (22) for causing said wavelengths distinct from each other to coincide on a same optical axis B.

9. The device (10) according to claim 8, **characterized in that** it comprises a second scanning device (16) configured so as to emit said wavelengths caused to coincide on the same optical axis B towards a third optical communication device (30) comprising demultiplexing means (11) for dissociating said wavelengths, the multiplexing means (22) of said optical communication device being fixed on the second scanning device.

10. The device (10) according to claims 5 and 9, **characterized in that** the first scanning device (15) and the second scanning device (16) comprise multistable elementary actuators configured so as to be electrically controlled by a control unit and **in that** the device comprises a communication module comprising:
- a first function for searching a communication with another optical communication device, during which the multistable elementary actuators of said first scanning device (15) and of said second scanning device are movable,
- a second sleep function, when the communication is established, during which the multistable elementary actuators are immobile.

11. A system **characterized in that** it comprises:
- at least one optical communication device (10) according to any one of claims 1 to 7,
- a second optical communication device (20) comprising a plurality of light emitters (21) adapted for emitting the number n1 of wavelengths distinct from each other and multiplexing means (22) for causing said wavelengths to coincide on a same optical axis.

12. The system **characterized in that** it comprises:
- at least one first optical communication device according to any one of claims 8 to 10,
- a second optical communication device (20) comprising a plurality of light emitters (21) adapted for emitting the number n1 of wavelengths distinct from each other and multiplexing means (22) for causing said wavelengths to coincide on a same optical axis A,
- a third optical communication device (30) comprising demultiplexing means (11) for distinctly dissociating the number n1 of wavelengths from each other,
said third device (30) being configured for detecting said wavelengths emitted by said first or second optical communication device (10, 20).

13. The system according to any one of claims 11 or 12, **characterized in that** the whole of the optical communication devices (10, 20, 30) comprises respective locomotion means for making them movable relative to each other.

14. An optical communication method in free space, multiplexed in wavelengths comprised between 400 nm and 1,600 nm comprising the following steps:
- emission, by a second optical communication device (20), of a number n1 of wavelengths caused to coincide on a same optical axis A,
- detection, by a first optical communication device (10), of the number n1 of wavelengths by means of one or several detectors (110) having a number n2 of optical filters (111) and of active elements corresponding to the number n1 of wavelengths, each active element being arranged for selectively detecting a wavelength from among said wavelengths via an optical filter (111) distinct from the active element (112) which is comprised in a casing (113), **characterized in that** the optical filter is in contact with a protective means (114) interposed between the optical filter (111) and the active element (112), said protective means (114) containing said casing (113).

15. The method according to claim 14, **characterized in that** it comprises the following steps:
- emission, by said first device (10), of the number n1 of wavelengths towards a third optical communication device (30),
- detection, by said second and/or third optical communication device (20, 30) of the number n1 of wavelengths.

16. The method according to claim 15, **characterized in that** the first device (10), the second device (20) and the third device (30) are movable between each other, the method further comprising the following steps:
- detection by scanning, by the first device (10), of the presence of the second optical communication device (20),
- detection by scanning, by the third device (30), of the presence of the first device (10).

17. The method according to claim 16, **characterized in that** the scanning is carried out by means of multistable actuators controlled by a control unit, the method comprising during the detection by scanning, by the first device (10), of the presence of at least one of the second and third optical communication devices (20, 30), steps of:
- moving the multistable actuators until establishment of a communication with the at least one of the second and third optical communication devices (20, 30),
- maintaining immobile the multistable actuators when the detection by the first communication device of the number n1 of wavelengths emitted by the at least one of the second and third optical communication devices (20, 30) is finished,
- again moving the multistable actuators after a predetermined period.
